# EUROPÄISCHE PATENTANMELDUNG

(11) **EP 0 863 037 A2**
(43) Veröffentlichungstag der Anmeldung: **09.09.1998**
(21) Anmeldenummer: 98102877.2
(22) Anmeldetag: 19.02.1998
(51) Int. Cl.: B60K 15/04

(54) **Verschluss für einen Einfüllstutzen eines Kraftfahrzeugtankes**

(30) Priorität: 07.03.1997 DE 19709415
(71) Anmelder: Daimler-Benz Aktiengesellschaft, 70567 Stuttgart (DE)
(72) Erfinder: Kremer, Adolf, 71686 Remseck (DE); Scheurenbrand, Dieter, 72649 Wolfschlugen (DE); Steinkämper, Reinhard, 71364 Winnenden (DE)

(57) **Zusammenfassung**

Die Erfindung betrifft einen Verschluß für einen Einfüllstutzen (2) eines Kraftfahrzeugtankes mit einem um eine Schwenkachse (5) verschwenkbaren Verschlußdeckel (1). Dieser ist entgegen der Einführbewegung eines Füllrohres (24) einer Zapfpistole (25) federbelastet vorgespannt und liegt in Schließstellung dichtend an einem unteren umlaufenden Öffnungsrand (46) des Durchlasses (35) an. Des weiteren vorgesehen ist ein vom Füllrohr beaufschlagbares tankseitig angeordnetes Verschwenkmittel (26), mittels dessen Betätigung der Verschlußdeckel (1) kraftsparend verschwenkbar ist. Um eine Betätigung des Verschlußdeckels (1) mit möglichst geringem Kraftaufwand über den gesamten Einführweg des Füllrohres (24) hinweg zu erreichen, wird vorgeschlagen, daß das Verschwenkmittel (26) an der Oberseite des Verschlußdeckels (1) nach Art einer Kurvenscheibe ausgebildet ist, deren Führungsfläche (27) der Schwenkachse zugewandt ist, wobei ein Umfangsabschnitt der Stirnseite des Füllrohres (24) während dessen Einführung in den Einfüllstutzen (2) an dem schwenkachsenfernen Endbereich (33) der Führungsfläche (27) zur Anlage gelangt.

## Beschreibung

Die Erfindung betrifft einen Verschluß für einen Einfüllstutzen eines Kraftfahrzeugtankes gemäß dem Oberbegriff des Patentanspruches 1.

Ein Verschluß der gattungsgemäßen Bauart ist aus der DE 195 04 265 A1 bekannt. Der dort beschriebene Verschluß beinhaltet einen Verschlußdeckel, der um eine zur Ebene, die die Einfüllstutzenachse aufspannt, vertikale Schwenkachse verschwenkbar ist. Dabei wird dann die Öffnungsstellung erreicht, wenn der Verschlußdeckel nach unten in Einfüllrichtung verschwenkt wird. In Schließstellung liegt der Verschlußdeckel am Öffnungsrand des Einfüllstutzens von der Seite des Tankinnenraumes aus dichtend an. Die mit dem Verschlußdeckel verbundene Verschwenkvorrichtung besteht in einem Hebel, der an einer Wandung des Tankinnenraumes um eine senkrecht zur Einfüllstutzenachse ausgerichtete Schwenkachse verschwenkbar befestigt ist und durch einen Schlitz von außen in den Einfüllstutzen hineinragt. Hierbei ist der Hebel so angeordnet, daß er von dem Füllrohr der Zapfpistole betätigbar ist. Um die Schwenkachse ist eine Schenkelfeder angeordnet, die sich einerseits am Hebel und andererseits an einem Wandungsvorsprung des Tankinnenraumes abstützt. Mittels der Schenkelfeder ist der Hebel entgegen der Einführbewegung der Zapfpistole vorgespannt und bringt dieser somit beim Einführen eine Gegenkraft entgegen. Des weiteren ist der Hebel nach unten hin mit einem Kipphebel über ein Gestänge gelenkig verbunden, der an einem Ende seine an der Wandung des Tankinnenraumes befestigten Schwenkachse aufweist und am anderen Ende den Verschlußdeckel trägt. Bei Betätigung des Hebels verringert sich mit zunehmender Öffnungsstellung das Übersetzungsverhältnis zwischen dem Hebel und dem Kipphebel, so daß dann mit kurzen Verschiebewegen des Füllrohres relativ große Schwenkwege des Verschlußdeckels erreichbar sind. In Verbindung mit der Schenkelfeder ist damit eine veränderliche Schließkraft in Abhängigkeit des Verschiebeweges des Einfüllrohres für den Verschlußdeckel ermöglicht, wobei die Schließkraft bei geschlossenem Deckel am größten ist. Nachteilig ist hierbei, daß gerade in der Einführphase, d.h. beim Aufstoßen des Verschlußdeckels die größte Kraft aufzuwenden ist, was insbesondere beim manuellen Betanken hinderlich ist. Weiterhin ergeben sich Abdichtprobleme hinsichtlich des Schlitzes, den der Hebel durchragt. Außerdem erfordert der Betätigungsmechanismus des Verschlußdeckels eine Vielzahl mechanischer Teile (Wellen, Hebel, Gestänge), was kostenintensiv ist und einen erheblichen Montageaufwand bedeutet.

Der Erfindung liegt die Aufgabe zugrunde, einen gattungsgemäßen Verschluß dahingehend weiterzubilden, daß in einfacher Weise und unter Gewährleistung eines sicheren zuverlässigen Verschlusses sich eine Betätigung des Verschlußdeckels zur Betankung mit möglichst geringem Kraftaufwand über den gesamten Einführweg des Füllrohres hinweg erreichen läßt.

Die Aufgabe ist erfindungsgemäß durch die Merkmale des Patentanspruches 1 gelöst.

Dank der Erfindung wird in einfacher Weise ein Mittel zur Betätigung des Verschlußdeckels direkt an diesem an schwenkachsenferner Stelle angebracht, wobei das eingeführte Füllrohr zuerst mit seinem schwenkachsenfernsten Umfangsbereich am Verschlußdeckel in beaufschlagende Berührung kommt. Dadurch ergibt sich ein maximaler Hebel für die Betätigung, wodurch nur eine sehr geringe Kraft aufgewendet werden muß, um den Verschlußdeckel aus seiner Schließstellung heraus zu verschwenken. Beim weiteren Einführen des Füllrohres wandert aufgrund der einzelnen ineinander übergehenden Schwenkstellungen des Verschlußdeckels und den unterschiedlichen in der Einführbewegung sich kontinuierlich sich ändernden Einführtiefen auf der Führungsfläche der Kurvenscheibe von dem schwenkachsenfernen Endbereich ausgehend entlang, wobei die Hebellänge zwar kleiner wird, jedoch die damit verbundene Hebelwirkung immer noch groß genug ist, um den Kraftaufwand zum Öffnen geringstmöglich zu halten. Gleichzeitig nähert sich der schwenkachsennächste Umfangsbereich des Füllrohres dem Verschlußdeckel an, wobei ab einer bestimmten Einführtiefe der schwenkachsenfernste Umfangsbereich von der Führungsfläche abhebt und die Hebelwirkung auf den nun an der Führungsfläche anliegenden schwenkachsennächsten Umfangsbereich übergeht. Hierbei wird die Hebelwirkung aufgrund der relativ kleinen Hebellänge schlagartig geringer, wodurch der Kraftaufwand plötzlich größer wird. Jedoch wird der Hebelarm dadurch in der weiteren Einführbewegung des Füllrohres wieder größer, daß der anliegende Umfangsbereich zum schwenkachsenfernen Endbereich auf der Führungsfläche hin geführt wird. Gleichzeitig tritt die Keilwirkung des eingeführten Füllrohres öffnungsunterstützend auf, so daß der zugehörige Kraftaufwand zum Einführen des Füllrohres bzw. zum - durch die direkte Beaufschlagung - damit verbundenen Verschwenken des Verschlußdeckels wesentlich verringert wird. Die Öffnungsstellung des Verschlußdeckels ist hierbei in der Anlage des schwenkachsenfernen Endbereiches an der Seite (Zylindermantel) des Füllrohres erreicht. Aufgrund der Erfindung kann auf den bekannten aufwendigen Hebelmechanismus verzichtet werden, wodurch Bauraum gespart sowie die Anzahl der Bauteile reduziert wird. Gleichzeitig wird die Montage des Verschlusses erleichtert, wobei für diesen - ausgehend von einer praxisüblichen Konstruktion ohne kraftsparendes Verschwenkmittel - jederzeit eine einfache Nachrüstbarkeit mit dem erfindungsgemäßen Verschwenkmittel gegeben ist. Des weiteren werden durch den Wegfall der Teilevielfalt und die Plazierung des Verschwenkmittels innerhalb des Durchlasses ohne konstruktive Durchdringung der Durchlaßwandung mittels eines Betätigungshebels die sich daraus ergebenden Abdichtprobleme beseitigt. Durch die hohe Hebelwirkung kann eine vorgespannte Schließfeder mit relativ hoher Schließkraft eingesetzt werden, wodurch ein sicherer zuverlässigen Verschluß gewährleistet ist, wobei durch die von der genannten Feder ausgeübte Anpressung des Verschlußdeckels an den Öffnungsrand des Durchlasses eine besonders gute Abdichtung erreicht wird und wobei die durch eine hohe Teilevielfalt auftretende Störanfälligkeit zugunsten der Zuverlässigkeit eines sicheren, d.h. auch über längere Betriebszeit des Fahrzeuges dichten Verschlusses wegfällt.

Zweckmäßige Ausgestaltungen der Erfindung können den Unteransprüchen entnommen werden; im übrigen ist die Erfindung anhand eines in den Zeichnungen dargestellten Ausführungsbeispieles nachfolgend näher erläutert; dabei zeigt:
Fig. 1 in einem seitlichen Längsschnitt den Verschlußdeckel des erfindungsgemäßen Verschlusses,
Fig. 2 den Verschlußdeckel aus Fig.1 in einer Draufsicht,
Fig. 3-7 jeweils in einem seitlichen Längsschnitt einen Tankeinfüllstutzen mit dem erfindungsgemäßen Verschluß nach Fig. 1 in einzelnen Stellungen des Einführvorganges eines Füllrohres einer Zapfpistole.

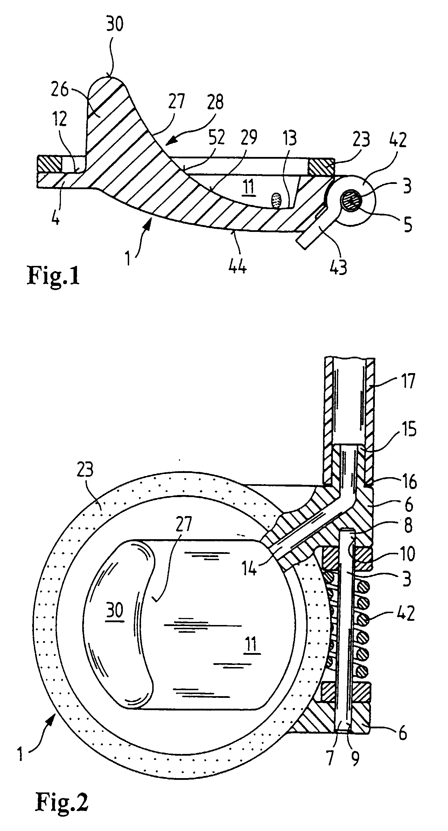

In Fig. 1 ist ein Verschlußdeckel 1 eines Verschlusses dargestellt, mit dem ein Einfüllstutzen 2 eines Kraftstofftankes eines Fahrzeuges verschließbar ist. Die Kinematik der Verschwenkung der Verschlußdeckels 1 ist so ausgelegt, daß sowohl eine manuelle Betankung wie auch eine robotergeführten automatische Betankung in einfacher Weise ohne besonderen Kraftaufwand realisiert ist.

Hierzu ist in bauraumsparender Weise eine Welle 3 unmittelbar am Rand 4 des Verschlußdeckels 1 angebracht, deren Mittenachse die Schwenkachse 5 des Verschlußdeckels 1 bildet. Am Rand 4 sind dafür zwei vom Verschlußdeckel 1 seitlich abstehende, parallel zueinander und einander gegenüberliegende Haltestege 6 angeformt, die für die Enden 7,8 der Welle 3 Lageraufnahmen 9,10 aufweisen. Die Schwenkachse 5 verläuft somit in - aufgrund des Wegfalls von Verbindungsbauteilen zwischen Schwenkachse 5 und Verschlußdeckel 1 - bauraumsparender Weise tangential zum im wesentlichen umfänglich kreisrunden Rand 4 des Verschlußdeckels 1 (Fig. 2).

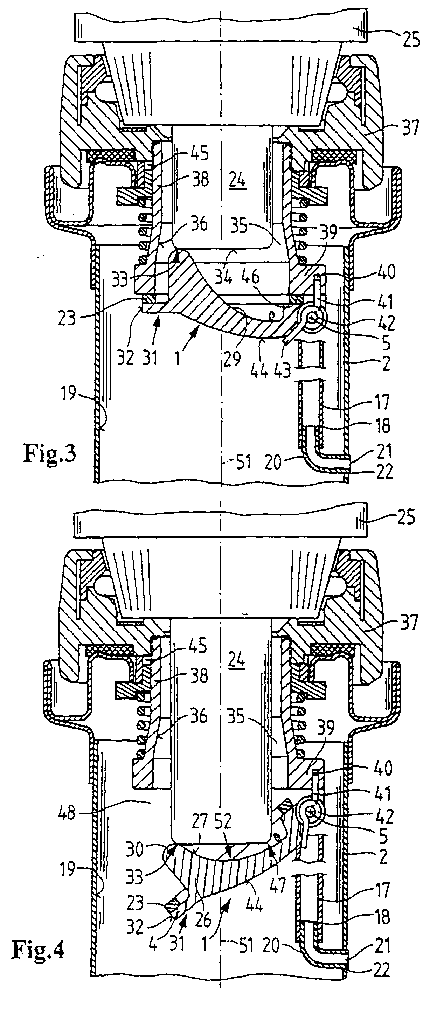

Der Verschlußdeckel 1 besitzt eine Sammelmulde 11 für Kondens- und/oder Regenwasser, die zur Schwenkachse 5 randnah in der Oberseite 12 des Verschlußdeckels 1 ausgebildet ist. Vom Grund 13 der Sammelmulde 11 aus, führt ein innerhalb des Deckelrandes 4 verlaufender Drainagekanal 14 ab, der in einem Schlauchanschlußstutzen 15 an einem der Haltestege 6 auf dessen der Lageraufnahme 9 der Welle 3 abgewandten Seite 16 ausmündet Auf den Stutzen 15 ist eine schlauchartige Drainageleitung 17 bsp. aus Silikon aufgestülpt, deren anderes Ende 18 (Fig. 3-7) an einem als Rohrbogen ausgebildeter und an der Innenseite 19 des Einfüllstutzens 2 angebrachter Anschlußstutzen 20 fluiddicht aufgesteckt ist. Der Einfüllstutzen 2 weist eine Austrittsöffnung 21 an der Stelle des Anbringungsendes 22 des Anschlußstutzens 20 auf, über die das gesammelte Wasser aus dem Tank austreten kann. Durch die Anordnung der Sammelmulde 11, ihres kontinuierlichen Übergangs zur Führungsfläche 27 und der Leitungsführung über die vom Drainagekanal 14 und der Drainageleitung 17 gebildeten Drainage nach außen wird erreicht, daß sich zu keiner Zeit Wasser sammeln kann, welches aufgrund seines der Schließkraft des Verschlußdeckels 1 entgegenwirkenden und somit öffnungswirksamen Gewichtes und seiner Kriecheigenschaften durch den Verschlußdeckel 1 an seinem umlaufenden Rand 4 hindurch in den Tankinnenraum gelangt, so daß die Zuverlässigkeit des Verschlusses zum Abhalten vom unerwünschten Eindringen verschmutzender bzw. den Kraftstoff im Tank in irgendeiner Weise beeinträchtigender Stoffe in den Tank wesentlich gefördert wird. Des weiteren wird auch eine Benetzung einer am Rand 4 auf der Oberseite 12 des Verschlußdeckels 1 angebrachten, insbesondere angeklebten diesen umlaufenden Elastomer-Flachdichtung 23 durch Wasser verhindert, so daß die Dichtigkeit des Verschlusses und somit ein sicherer Verschluß gewährleistet ist. Gleichfalls sorgt die beschriebene Abflußvorrichtung dafür, daß beim Öffnen des Verschlußdeckels 1 durch ein Füllrohr 24 einer Tankzapfpistole 25 vermieden wird, daß Wasser in den Tank ungehindert eindringen kann.

Im schwenkachsenabgewandten Anschluß an die Sammelmulde 11 ist am Verschlußdeckel 1 auf dessen Oberseite 12 eine nasenartige Kurvenscheibe 26 angeformt, die jedoch auch als gesondertes Bauteil ausgebildet und am Verschlußdeckel 1 in herkömmlicher Weise befestigt sein kann. Die Kurvenscheibe 26 weist eine zur Schwenkachse 5 hin gewandte Führungsfläche 27 auf, die konkav eingewölbt ist. Der Verlauf der Einwölbung 28 geht im schwenkachsennahen Endbereich 52 der Führungsfläche 27 dabei kontinuierlich in den Verlauf der anschließenden Wandung 29 der Sammelmulde 11 des Verschlußdeckels 1 über. Die Kurvenscheibe 26 weist an der schwenkachsenfernsten Stelle einen erhöhten kuppenartigen Endbereich 30 auf, der hier aufgrund der Einwölbung 28 der Führungsfläche 27 zustande kommt. Prinzipiell sind jedoch auch andere Verlaufsformen der Führungsfläche 27 denkbar, die sich von diesem erhöhten Endbereich 30 aus zur Schwenkachse 5 hin mit abnehmender Höhe der Kurvenscheibe 26 erstrecken.

In Schließlage des eingebauten Verschlußdeckels 1 nimmt, wie aus Fig. 3 ersichtlich, der schwenkachsenferne Endbereich 30 der Führungsfläche 27 deren geodätisch höchste Lage ein. Der Endbereich 30 ist in der Draufsicht gemäß der Fig. 2 nierenförmig ausgebildet. Er ist vom nächstgelegenen Randbereich 31 auf schwenkachsenabgewandter Seite 32 des Verschlußdeckels 1 aus zur Schwenkachse 5 hin mit Abstand versetzt gelegen. Dieser Abstand ist dabei so gewählt bzw. bemessen, daß das Füllrohr 24 beim Einführen in den Einfüllstutzen 2 zu Beginn lediglich mit einem schwenkachsenfernen Umfangsabschnitt 33 seiner Stirnseite 34 am Endbereich 30 der Führungsfläche 27 zur Anlage gelangt. Die Höhe des schwenkachsenfernen Endbereiches 30 der Führungsfläche 27 ist derart dimensioniert, daß der Schwenkradius des Endbereiches 30 bezogen auf die Schwenkachse 5 des Verschlußdeckels 1 kleiner ist als der des nebenliegenden schwenkachsenfernen Randbereiches 31 des in Schließstellung befindlichen Verschlußdeckels 1 an der Stelle einer einen Durchlaß 35 des Einfüllstutzens 2 radial begrenzenden Wandung 36. Dadurch wird eine verklemmfreie Verschwenkung des Verschlußdeckels 1 und damit ein zuverlässiger sicherer Verschluß sichergestellt, wobei zudem das Füllrohr in den Einfüllstutzen 2 ungehindert eingeführt werden kann.

In Fig. 3 weist der Einfüllstutzen 2 einen Andockaufsatz 37 für eine Zapfpistole 25 eines Tankroboters auf, wobei der Andockaufsatz 37 auf den Einfüllstutzen 2 nach Art eines Bajonettverschlusses lösbar aufgeschraubt ist. Der Andockaufsatz 37 weist zentrisch einen hohlzylindrischen zum Tankinnenraum hin konisch sich erweiternden Einsatz 38 auf, an dessen unterem Ende 39 stirnseitig eine axiale Aussparung 40 angeordnet ist. In der Aussparung 40 ist ein Schenkel 41 einer Schenkelfeder 42 eingeklemmt, die konzentrisch um die die Schwenkachse 5 beinhaltende Welle 3 gewunden ist und die mit ihrem anderen Schenkel 43 sich an der Unterseite 44 des Verschlußdeckels 1 abstützt. Damit sind der Verschlußdeckel 1 samt der Welle 3 innerhalb des Einfüllstutzens 2 nahe dessen oberer Mündungsöffnung 45 angeordnet am Einsatz 38 betriebssicher gehalten.

Durch seine Anordnung ist der sowohl manuell als auch durch den Tankroboter betätigbare Verschlußdeckel 1 samt Welle 3 in einfacher Weise für herkömliche Tankeinfüllstutzen nachrüstbar und bei Schadhaftigkeit auswechselbar ist. Durch die Befestigung am Einsatz 38 ergibt sich auch eine wesentliche Vereinfachung der Plazierung des Verschlußdeckels 1 im Einfüllstutzen 2. Die Anordnung des Verschlußdockels 1 nahe der Mündungsöffnung 45 des Einfüllstutzens 2, die daraus resultiert, ermöglicht eine bauraumsparende Reduzierung der Füllrohrlänge und eine Verminderung der Einführzeit des Füllrohres 24, so daß das Betanken weniger Zeit in Anspruch nimmt.

Die Innenwandung 36 des Einsatzes 38 begrenzt den Durchlaß 35 des Einfüllstutzens 2, durch den das Füllrohr 24 der Zapfpistole 25 eingeführt wird. In Fig. 3 befindet sich der Verschlußdeckel 1 in Schließlage und liegt von der Schenkelfeder 42 in vorgespanntem Zustand entgegen der Einführbewegung des Füllrohres 24 gerichtet federbelastet über die Elastomerdichtung 23 dichtend an der Stirnseite 46 des den umlaufenden Öffnungsrand des Durchlasses 35 bildenden unteren Endes 39 des Einsatzes 38 an. Das Füllrohr 24 ist soweit in den Durchlaß 35 eingeführt, daß es mit seinem schwenkachsenfernen Umfangsabschnitt 33 der Stirnseite 34 am Endbereich 30 der Führungsfläche 27 der Kurvenscheibe 26 anliegt. In der beschriebenen Einbaulage des Verschlußdeckels 1 ist die Schwenkachse 5 außerhalb des lichten Durchmessers des zentralen Durchlasses 35 des Einfüllstutzens 2 im Tank angeordnet und liegt senkrecht zu der von der Mittelachse 51 des Durchlasses 35 aufgespannten Ebene.

Bei weiterem Einführen des Füllrohres 24 nach Fig. 4 wird der Verschlußdeckel 1 durch die Beaufschlagung mit dem Umfangsabschnitt 33 des Füllrohres 24 entgegen der Federkraft der Schenkelfeder 42 aufgedruckt und verschwenkt. Hierbei nähert sich das Füllrohr 24 mit seinem schwenkachsennahen Umfangsabschnitt 47 dem Verschlußdeckel 1 an, während der schwenkachsenferne Umfangsabschnitt 33 aus dem Endbereich 30 der Führungsfläche 27 der Kurvenscheibe 26 in Richtung der Schwenkachse 5 herausläuft. Die konkave Einwölbung 28 der Führungsfläche 27 verhindert einen zu frühen Kontakt des schwenkachsennahen Umfangsabschnittes 47 des Füllrohres 24 mit dem Verschlußdeckel 1, so daß möglichst lange in der Verschwenkphase ein größtmöglicher Hebel über den schwenkachsenfernen Umfangsabschnitt 33 des Füllrohres 24 am Verschlußdeckel 1 gegeben ist, der einen geringen Kraftaufwand zum Verschwenken bzw. zum Öffnen des Verschlußdeckels 1 mitsichbringt. Die Kurvenscheibe 26 bildet dabei das Verschwenkmittel für den Verschlußdeckel 1, so daß das Füllrohr 24 beim Einführen durch die im Ausführungsbeispiel aufgrund der Anformung der Kurvenscheibe 26 am Verschlußdeckel 1 erzielte Einstückigkeit von Kurvenscheibe 26 und Verschlußdeckel 1 direkt und unmittelbar diesen beim Verschwenken betätigt.

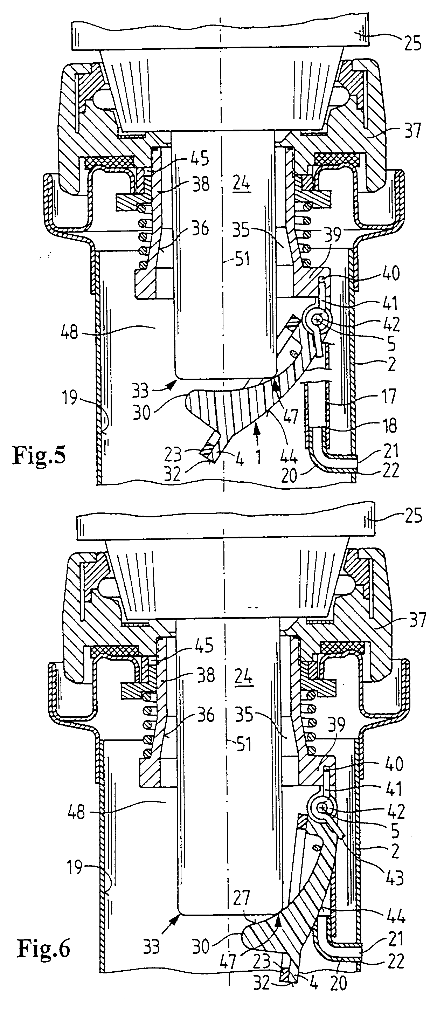

In der weiteren Einführbewegung des Einfüllrohres 24 gelangt dann dessen schwenkachsennaher Umfangsabschnitt 47 zur Anlage am Verschlußdeckel 1 im Bereich dessen Sammelmulde 11, wonach der Verschlußdeckel 1 vom schwenkachsenfernen Umfangsabschnitt 33 des Füllrohres 24 abhebt (Fig. 5). Hierbei erfolgt ein Sprung in der Hebellänge zu einem kürzeren Hebel hin, mittels dessen momentan ein größerer Kraftaufwand zum weiteren Verschwenken des Verschlußdeckels 1 erforderlich wäre. Dieser zusätzliche Aufwand wird jedoch durch die gleichzeitig eintretende Keilwirkung des Füllrohres 24 in der durch die Verschwenkung des Verschlußdeckels 1 aus seiner Schließlage sich öffnenden Durchlaßöffnung 48 ausgeglichen.

Wird gemäß Fig. 6 das Einfüllrohr 24 tiefer durch den Durchlaß 35 hindurchgeschoben, wandert der schwenkachsennahe Umfangsabschnitt 47 des Einfüllrohres 24 in der Schwenkbewegung entlang der Führungsfläche 27 nach außen zu deren schwenkachsenfernen Endbereich 30, wobei der Hebelarm kontinuierlich größer und somit die wirksame Hebelkraft über das Füllrohr 24 zum weiteren Öffnen bzw. Verschwenken des Verschlußdeckels 1 größer wird. Der dazu nötige Kraftaufwand wird deswegen immer kleiner.

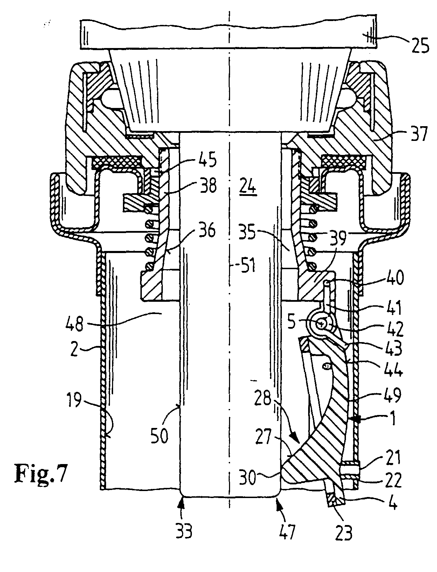

In Fig. 7 befindet sich das Einfüllrohr 24 in seiner maximalen Einführtiefe und damit in Befüllage. Der Verschlußdeckel 1 ist in seiner Offenstellung aus seiner Schließlage heraus nach unten hin so weit herausgeschwenkt, bis der schwenkachsenferne Endbereich 30 außerhalb des Durchgriffbereiches des Einfüllrohres 24 liegt, und befindet sich nahe der Innenseite 19 des Einfüllstutzens 2. Die Unterseite 44 des Verschlußdeckels 1 darf daher im Falle einer Abweichung von einer ebenen Ausbildung nur so gestaltet sein, daß bei einer Wölbung - wie es im Ausführungsbeispiel der Fall ist - zwischen dem Scheitelpunkt 49 der Wölbung und der Innenseite 19 des Einfüllstutzens 2 in der Offenstellung des Verschlußdeckels 1 ein Sicherheitsabstand besteht. Dadurch ist gegeben, daß der Verschlußdeckel 1 aufgrund einer eventuellen Anlage an der Innenseite 19 des Einfüllstutzens 2 über seine gewölbte Unterseite 44 keine verklemmende Wirkung auf das Einführen des Einfüllrohres 24 in der letzten Einführphase auftritt. Die zulässige Verwölbung der Unterseite 44 des Verschlußdeckels 1 ist jedoch immer in Relation zur Höhe des schwenkachsenfernen Endbereiches 30 der Führungsfläche 27 zu sehen. Je größer der Abstand zwischen dem Endbereich 30 und der Lage der quer zur Einführrichtung des Einfüllrohres 24 im Verschlußdeckel 1 durch den nahezu kreisrunden Rand 4 verlaufenden Ebene ist, desto weniger gewölbt darf die Unterseite 44 ausgestaltet sein. In der Öffnungsstellung des Verschlußdeckels 1 rutscht der Endbereich 30 der Führungsfläche 27 über den schwenkachsennahen Umfangsabschnitt 47 des Einfüllrohres 24 nach außen und liegt an dessen Außenumfang 50 an.

Die Überführung des Verschlußdeckels 1 aus seiner Offenstellung in der Befüllstellung des Einfüllrohres 24 in die Schließlage des Verschlußdeckels 1 durch Zurückschwenken erfolgt gemäß den beschriebenen Bewegungsablaufsschritten von Verschlußdeckel 1 und Einfüllrohr 24, jedoch in umgekehrter Reihenfolge. Der Verschlußdeckel 1 wird beim Herausziehen des Einfüllrohres 24 aus dem Einfüllstutzen 2 durch die Schenkelfeder 42 in die Schließlage getrieben und wird durch sie an den Öffnungsrand des Durchlasses 35 wieder dichtend angepreßt.

## Patentansprüche

1. Verschluß für einen Einfüllstutzen eines Kraftfahrzeugtankes mit einem um eine außerhalb des lichten Durchmessers eines zentralen Durchlasses des Einfüllstutzens im Tank angeordnete und senkrecht zu einer von der Mittelachse des Durchlasses aufgespannten Ebene gelegene Schwenkachse verschwenkbaren Verschlußdeckel, der entgegen der Einführbewegung eines Füllrohres einer Zapfpistole gerichtet federbelastet vorgespannt ist und in Schließstellung dichtend an einem unteren umlaufenden Öffnungsrand des Durchlasses anliegt, und mit einem vom Füllrohr beaufschlagbaren tankseitig angeordneten Verschwenkmittel, mittels dessen Betätigung der Verschlußdeckel kraftsparend verschwenkbar ist,
**dadurch gekennzeichnet,**
daß das Verschwenkmittel an der Oberseite (12) des Verschlußdeckels (1) befestigt und nach Art einer Kurvenscheibe (26) ausgebildet ist, deren Führungsfläche (27) der Schwenkachse (5) zugewandt ist, wobei die in Schließlage höchste geodätische Stelle der Führungsfläche (27) den schwenkachsenfernen Endbereich (30) ihres in Richtung der Schwenkachse (5) sich erstreckenden Verlaufes bildet, der auf schwenkachsenabgewandter Seite (32) des Verschlußdeckels (1) nahe dessen Randes (4) angeordnet ist und in Schließlage einem schwenkachsenfernen Umfangsabschnitt (33) der Stirnseite (34) des in der Einführphase befindlichen Füllrohres (24) in axialer Richtung gegenüberliegt.

2. Verschluß nach Anspruch 1,
**dadurch gekennzeichnet,**
daß die Kurvenscheibe (26) am Verschlußdeckel (1) angeformt ist.

3. Verschluß nach Anspruch 1,
**dadurch gekennzeichnet,**
daß im Anschluß an den schwenkachsennahen Endbereich (52) der Führungsfläche (27) im Verschlußdeckel (1) eine Sammelmulde (11) angeordnet ist, von deren Grund (13) aus eine Drainage (14,17) abführt, die aus dem Tank herausführt.

4. Verschluß nach Anspruch 1,
**dadurch gekennzeichnet,**
daß eine die Schwenkachse (5) des Verschlußdeckels (1) bildende Welle (3) in den der Führungsfläche (27) der Kurvenscheibe (26) gegenüberliegenden Rand (4) des Verschlußdeckels (1) integriert ist.

5. Verschluß nach Anspruch 1,
**dadurch gekennzeichnet,**
daß am Rand (4) des Verschlußdeckels (1) auf dessen Oberseite (12) eine den Rand (4) umlaufende Elastomer-Flachdichtung (23) angebracht ist.

6. Verschluß nach Anspruch 1,
**dadurch gekennzeichnet,**
daß der Verschlußdeckel (1) und die Schwenkachse (5) innerhalb des Einfüllstutzens (2) nahe dessen oberer Mündungsöffnung (45) angeordnet sind.

7. Verschluß nach Anspruch 6,
**dadurch gekennzeichnet,**
daß am Einfüllstutzen (2) ein hohlzylindrischer Einsatz (38) angebracht ist, an dessen unterem Ende (39) der Verschlußdeckel (1) samt der Schwenkachse (5) gehalten sind.

8. Verschluß nach Anspruch 1,
**dadurch gekennzeichnet,**
daß die Führungsfläche (27) durch eine konkave Einwölbung (28) der Kurvenscheibe (26) gebildet ist.

9. Verschluß nach Anspruch 1,
**dadurch gekennzeichnet,**
daß die Höhe des schwenkachsenfernen Endbereiches (30) der Führungsfläche (27) derart bemessen ist, daß der Schwenkradius dieses Endbereiches (30) kleiner ist als der des nebenliegenden Randes (4) des in Schließstellung befindlichen Verschlußdeckels (1) an der Stelle der den Durchlaß (35) radial begrenzenden Wandung (36).
